# EUROPEAN PATENT SPECIFICATION

(11) **EP 3 576 946 B1**
(45) Date of publication and mention of the grant of the patent: **07.09.2022**
(21) Application number: 18707147.7
(22) Date of filing: 30.01.2018
(51) Int. Cl.: B32B 27/08, B32B 27/32

(54) **MULTILAYER ADHESIVE MATERIAL FOR FOOD CONTACT**
MEHRSCHICHTIGES KLEBEMATERIAL FÜR LEBENSMITTELKONTAKT
MATÉRIAU ADHÉSIF MULTICOUCHE POUR CONTACT ALIMENTAIRE

(30) Priority: 01.02.2017 IT 201700010772
(43) Date of publication of application: 11.12.2019
(73) Proprietor: Irplast S.p.A., 50053 Empoli (FI) (IT)
(72) Inventor: CASTIELLO, Stefania, 56029 Santa Croce sull'Arno (Pisa) (IT); DE BARTOLO, Luca, 46012 Bozzolo (Mantova) (IT)
(74) Representative: Modiano, Micaela Nadia
(86) International application number: PCT/IB2018/050554
(87) International publication number: WO 2018/142274

(56) References cited:
- WO-A1-00/34131
- WO-A1-2007/114514
- WO-A1-2016/079367
- US-A1- 2007 042 142

## Description

### FIELD OF THE INVENTION

The present invention relates to a coupled multilayer adhesive material suitable for food contact, which is particularly suitable for the preparation of rolls of adhesive material usable for wrapping and grouping horticultural products, in particular fruit and vegetables.

### PRIOR ART

Many horticultural products are placed on the market using primary materials such as, for example, tubs and bags, made of cardboard, plastic material or composite materials. This type of solution is especially adopted for horticultural products intended for sale in large scale retail, where the consumer takes the products directly from the containers.

As well as having a containing function, primary packaging also performs the further function of conveying a series of technical and commercial information useful for the end consumer, which cannot be affixed directly to the product, such as the expiry date, the bar code and the identification of the product's origin, through the producer's logo, etc.

Packaging for horticultural products must be stable, i.e. maintain its functions, both at ambient temperature, and at the chilled storage temperatures of the products, which can reach 2°/4°C.

In fact, any material used for packaging or grouping horticultural products intended for human or animal food, must be suitable for contact with food, in particular fulfilling the requirements envisaged by relevant national and EU regulations, for example EU Regulation 10/2011 as amended, concerning plastic packaging.

However, the packaging solutions normally adopted for these products generate a notable quantity of packaging waste, whose management has a notable environmental and economic impact, both for the producers and for the general public.

For this reason, the problem of reducing packaging is at the forefront for the industries that deal with the packaging of goods, also in the agri-food sector.

In various industrial sectors, packaging solutions have been adopted for some time, which allow objects of the most varied shapes and sizes to be grouped using plastic films or bands placed in direct contact with the products to be packaged.

For example, heat-shrink films and bands can be used to group articles that are not very heat sensitive and have irregular shapes, thanks to the property of the film to shrink due to the effect of the temperature increase. However, this solution cannot be used for grouping horticultural products which, due to their extreme sensitivity to temperature changes, could have their organoleptic characteristics and shelf life compromised.

Patent application EP1074593A2, in the name of the Applicant, describes a printed plastic band for grouping articles in which the side of the band that is placed in contact with the articles to be grouped is covered in temperature-sensitive acrylic adhesive arranged in transverse stripes with respect to the length of the band. However, such band is not suitable for use in contact with food, in particular horticultural products, since the acrylic adhesive used leaves residues when removed from the products. Furthermore, the printing on the opposite side with respect to the adhesive is not shielded in any way and can be transferred onto the adhesive when the latter is wrapped in band, contaminating the horticultural product onto which the band is applied.

Patent EP1862518B2, also in the name of the Applicant, describes a BOPP film which can be printed and made adhesive using a pressure-sensitive adhesive. However, in order for the film to be usable for grouping articles, it must heat shrink at temperatures of 20°-200°C.

Patent EP928273 describes a band made of plastic material printed on one side and covered with adhesive on the opposite side, which can be used to group containers, particularly bottles. However, this band is not suitable for grouping horticultural products either since the adhesive, which could be a pressure-sensitive acrylic resin or a "hot melt" adhesive, leaves residues when applied to horticultural products. Furthermore, the printed side of the band can be covered with a lacquer which, like ink, can be transferred onto the adhesive when the band is wound into rolls and contaminate the horticultural product.

WO2007114514 discloses an indicator including a color-changing layer (A) which has a porous film having pores therein and a liquid compound retained in the pores, and a substrate layer (B) having a barrier property, which are laminated with the first adhesive layer (D), in which the liquid compound has a vapor pressure of from 1 x 10⁻⁶ to 5 x 10⁻³ mmHg at 25°C. and the porous film contains a polyolefin resin containing 10% by weight or more of polyolefin having a molecular chain length of at least 2850 nm. WO2016079367 discloses a facestock for adhesive label, an adhesive label and an adhesive label laminate comprising an uniaxially in machine direction oriented facestock. According to an embodiment core layer comprises the following components: propylene homopolymer: a modifier consisting of at least one of the following: olefin elastomer, olefin plastomer and olefin block copolymer: and low density polyethylene.

US 2007/042142 discloses printed substrates coated with an ethylene-acrylic acid copolymer based coating capable of adhering and providing wet out properties with UV inkjet inks. The coating can contain an acrylic polymer.

WO0034131 a tape including a backing layer and an adhesive layer on the first side of the backing layer. At least one of the backing layer and the adhesive layer are colored to yield a tape opacity.

In this context, the technical task underpinning the present invention is to propose a material suitable for contact with food that can be used for wrapping horticultural products, particularly suitable for grouping horticultural products, with a primary packaging function, i.e. packaging placed in direct contact with the product to be contained.

A further technical task of the present invention is to propose a material for contact with food that can be printed and used for wrapping, in particular grouping, horticultural products without contaminating the products themselves with the inks used for printing. Furthermore, the material proposed must be able to guarantee a sufficient seal also under humid conditions in which the stickiness of the adhesive is generally significantly reduced, leading to the reopening of the package.

Another object of the present invention is to provide a material suitable for contact with food that can be used for producing a roll of adhesive material, in particular for producing a roll of linerless adhesive material suitable for manual applications with a dispenser or for use on taping and packaging machines.

### SUMMARY OF THE INVENTION

The stated technical task and specified aims are substantially achieved by a multilayer adhesive material for food contact, comprising:
- a polyolefin film 14 having a first surface 14a and a second surface 14b opposite the first;
- a polyolefin film 11 coupled to the polyolefin film 14 on the first surface 14a by means of a layer 13 comprising at least one adhesive;
- a layer 12 comprising at least one ink interposed between the polyolefin films 11 and 14; and
- an adhesive layer 15 comprising at least one pressure-sensitive adhesive arranged on the second surface 14b of the polyolefin film 14, wherein the at least one pressure-sensitive adhesive is an aqueous emulsion stable at pH < 7.5 based on at least one acrylic polymer.

In fact, the Applicant has found that the multilayer adhesive film described above can be advantageously used for producing rolls of linerless adhesive material, suitable for contact with food, which can be used for wrapping and/or grouping horticultural products by placing the adhesive layer 15 in direct contact with the products, without leaving any residue when the adhesive material is removed.

### BRIEF DESCRIPTION OF THE DRAWINGS

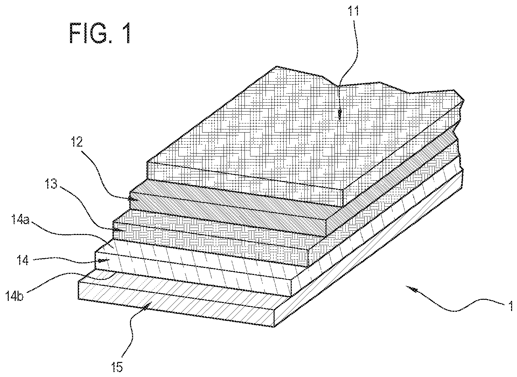

The present invention will be described in detail below also with the aid of the appended figure 1 and with illustrative and non-limiting examples. In particular, the appended figure 1 schematically represents a preferred embodiment of the multilayer adhesive material according to the invention.

### DETAILED DESCRIPTION OF THE INVENTION

In the present description, the claims and the appended figure, the multilayer adhesive material for food contact can be generally indicated as adhesive material 1.

In the appended figure 1, the relative thicknesses of the different layers that compose the adhesive material 1 are disclosed merely by way of example and are not to be considered realistic.

In the present description and the appended claims, the percentages are considered to be expressed by weight, unless otherwise indicated.

In the present description and appended claims, the expression "BOPP film" relates to a multilayer biaxially oriented polypropylene film.

In a first aspect thereof, the present invention relates to a multilayer adhesive material for food contact 1 comprising:
- a polyolefin film 14 having a first surface 14a and a second surface 14b opposite the first;
- a polyolefin film 11 coupled to the polyolefin film 14 on the first surface 14a by means of a layer 13 comprising at least one adhesive;
- a layer 12 comprising at least one ink interposed between the polyolefin films 11 and 14; and
- an adhesive layer 15 comprising at least one pressure-sensitive adhesive arranged on the second surface 14b of the polyolefin film 14, wherein the at least one pressure-sensitive adhesive is an aqueous emulsion stable at pH less than about 7.5 based on at least one acrylic polymer.

In one embodiment, the at least one pressure-sensitive adhesive may be an aqueous emulsion based on at least one acrylic polymer, wherein the aqueous emulsion may be stable at about 3.0≤pH<7.5.

|Particularly, the at least one pressure-sensitive adhesive may be an aqueous emulsion based on at least one acrylic polymer, wherein the aqueous emulsion may be stable at about 7.0, preferably at pH ≤ about 6.5, preferably about 3.0 ≤ pH ≤ 6.5, more preferably about 3.0 ≤ pH ≤ 5.0.

| Also,the at least one pressure-sensitive adhesive may be an aqueous emulsion based on at least one acrylic polymer, wherein the aqueous emulsion may be stable at about 6.5 ≤ pH < 7.5.

Such acrylic adhesive emulsions are available on the market and may be adhesives suitable for contact with foods according to the provisions of EU reference legislation (EU Regulation 10/2011).

It has been experimentally observed that the use of a pressure-sensitive adhesive in the form of an aqueous emulsion based on an acrylic polymer, wherein the emulsion is stable at the pH values specified above, allows an adhesive material to be obtained having the following advantages:
- the adhesive material 1 can be wound in rolls, even large ones, preferably in rolls wherein the adhesive material is linerless, which can be easily unwound without the adhesive layer 15 leaving residues on the surface of the polyolefin film 11 with which it is in contact when the roll is wound;
- the adhesive material 1 can be used for wrapping and/or grouping horticultural products by placing the adhesive layer 15 in direct contact with the products, without leaving residues of adhesive on the products when the adhesive material is removed.

TThe pressure-sensitive adhesive comprised in the adhesive layer 15 may be of the removable type.

The at least one pressure-sensitive adhesive may be a stable aqueous emulsion based on at least one acrylic polymer as described above, having at least one of the following properties:
- viscosity about 100-600 mPa.s (Brookfield RV, 25°C, spindle 3, 30 rpm); and/or
- solid content about 45-70% by weight, preferably about 53-68% by weight.

In a further embodiment, the at least one pressure-sensitive adhesive may have all the characteristics described above.

The adhesive layer 15 may be continuous or discontinuous, preferably continuous. When discontinuous, the adhesive layer 15 may be arranged on the surface 14b of the polyolefin film 14 transversely or obliquely with respect to the greatest dimension of the adhesive material 1.

In the layer 15, the dry weight of the at least one pressure-sensitive adhesive per unit of area covered with adhesive may be about 5-50 g/m², preferably about 10-30 g/m².

The layer 12 comprising at least one ink is advantageously interposed between the layer 14 and the layer 11. The configuration adopted has the advantage that the polyolefin film 11 shields the layer 12, protecting it from scratches and abrasions, i.e. from the deterioration of the print quality. Furthermore, shielding the layer 12 with the polyolefin film 11 prevents the transfer of the at least one ink onto the adhesive layer 15 when the adhesive material 1 is wound into rolls. The at least one ink of the layer 12 may be an ink known to a person skilled in the art, of the type normally used for printing on polyolefin films, such as, for example, water- or solvent-based inks available on the market, generally containing nitrocellulose and polyurethane resins. The layer 12 may be continuous or, preferably, discontinuous, forming text, graphical elements, etc. The layer 12 may be arranged (applied) onto the surface 14a of the polyolefin film 14 or onto the surface of the polyolefin film 11 intended to (configured to) be coupled to the polyolefin film 14. In a preferred embodiment, schematically reported in figure 1, the layer 12 comprising at least one ink may be arranged on the surface of the polyolefin film 11 intended to be coupled to the polyolefin film 14. In this embodiment, the at least one ink of the layer 12 is clearer. The layer 12 may be arranged between the polyolefin film 11 and 14 by application with methods and equipment known to a person skilled in the art, e.g. through flexographic printing.

The layer 13 may comprise at least one laminating adhesive, of the type normally used in the plastic film sector for the coupling (lamination) of polyolefin films, such as, for example, a thermoplastic adhesive, e.g. polymers and copolymers of vinyl acetate and/or vinyl chloride, or a thermosetting adhesive, such as, for example, polyester or polyurethane based resins. Normally, such adhesives are available on the market.

The layer 13 may comprise at least one solvent-free polyurethane adhesive, preferably at least one two-component polyurethane adhesive. The films 11 and 14 may be laminated using at least one two-component polyurethane adhesive for preparing the layer 13, in the following process conditions:
- mixing temperature of the adhesive: about 40-55°C;
- temperature of the rollers: about 45-55°C; and
- lamination temperature: about 40-60°C.

At the end of the lamination, the complete curing time of the two-component polyurethane adhesive at ambient temperature (about 25°C) is preferably less than or equal to about 10 days, more preferably less than or equal to about 8 days. At the end of said curing period, the quantity of primary aromatic amines determined with a migration test as specified in the experimental part, is preferably less than or equal to 0.01 mg per Kg of food.

Alternatively, the layer 13 may comprise at least one adhesive for dry lamination, of the type normally used in the sector.

The layer 13, preferably continuous, may be contained in the film 1 in quantities of about 1-3 g/m², preferably about 2 g/m².

In one embodiment, at least one of the polyolefin films 11 and 14 may be a BOPP film comprising at least three layers A/B/C, wherein:
- the layer (A) and the layer (C) comprise at least one propylene polymer independently selected from propylene homopolymer, copolymers of propylene with at least one comonomer selected from ethylene and linear or branched C4-C12 alpha-olefins, and mixtures thereof; and
- the layer (B) comprises at least one propylene polymer with MFR ≤3 g/10min. (230°C/2,16 kg) selected from propylene homopolymer, copolymers of propylene with at least one comonomer selected from ethylene and linear or branched C4-C12 alpha-olefins, and mixtures thereof.

Preferably, the polyolefin film 11 and the polyolefin film 14 are both BOPP films as described above.

At least one of the layers (A), (B) and (C) of at least one of the polyolefin films 11 and 14 may comprise at least one copolymer of propylene independently selected from copolymers of propylene with at least one comonomer selected from ethylene and linear or branched C4-C8 alpha-olefins, and mixtures thereof. The at least one comonomer can be selected from ethylene, butene (preferably 1-butene), hexene, octene and mixtures thereof. The total quantity of at least one comonomer in the copolymer may be about 0.5-25% by weight, preferably about 1-7% by weight.

Optionally, at least one of the copolymers of propylene of layers (A), (B) or (C) may further comprise at least one comonomer derived from a C4-C20 diene preferably selected from linear diene (preferably conjugated linear diene), branched diene (preferably conjugated branched diene), cyclic diene, vinyl cycloalkene, vinyl aromatic diene, heteroaromatic diene, vinyl heteroaromatic diene and mixtures thereof, more preferably selected from cyclopentadiene, 2-methyl-1,3-butadiene and mixtures thereof, preferably in quantities of about 0.5-10% in moles.

Optionally, at least one of the layers (A) and (C) of at least one of the polyolefin films 11 and 14 may comprise at least one slip agent and/or antiblocking agent, preferably selected from:
- organic slip agent and/or antiblocking agent, more preferably polymethylmethacrylate (PMMA), optionally in the form of spherical particles having a mean diameter of about 2-8 µm, preferably 3-5 µm;
- organic-inorganic slip agent and/or antiblocking agent, more preferably a polyorganosiloxane;
- inorganic slip agent and/or antiblocking agent, more preferably silica, optionally in the form of spherical particles having a mean diameter of about 2-8 µm, preferably 3-5 µm; and
- mixtures thereof.

Generally, the slip agents and/or antiblocking agents can be added to the at least one propylene polymer in the form of at least one masterbatch comprising about 3-30% by weight of slip agent and/or antiblocking agent with respect to the weight of the masterbatch itself, the remaining part of the masterbatch being a propylene polymer. The total quantity of slip and/or antiblocking masterbatch that may be present in a layer may be about ≤ 3% by weight, preferably about 0.5-2.5% by weight. The quantities of slip and/or antiblocking masterbatch indicated allow large rolls of adhesive material 1 to be obtained without any roll unwinding problems either in manual applications or in applications with taping/labelling machines.

| The slip and/or antiblocking masterbatch can be selected from Polybatch^{®} ABVT 26 NSC, Polybatch^{®} ABVT 30 NSC, Polybatch^{®} ABVT 19 NSC (A. Schulman Inc.), Constab AB06001 PP, Constab AB06084 PPR, Constab AB06060 PPR (Constab Polyolefin Additives GmbH), Skiblock 10 (Ampacet Corp.), and mixtures thereof.

Preferably, the layer (A) and the layer (C) of the polyolefin films 11 and 14 may both comprise at least one slip and/or antiblocking agent as described above.

Optionally, and preferably, at least one of the layers (A) and (C) of at least one of the polyolefin films 11 and 14 may be subjected to a surface treatment for increasing the surface tension and improving the printability of the film e.g. corona or flame treatments, according to methods known to a person skilled in the art. The polyolefin film 14 may undergo a flame treatment on the surface 14a and a corona treatment on the surface 14b, thus promoting the adhesion of the layers 13 and 15.

| The central layer (B) of at least one of the polyolefin films 11 and 14, preferably the central layer of both the polyolefin films 11 and 14, may comprise at least one propylene homopolymer, preferably with MFR ≤3 g/10min. (230°C/2,16 kg).

When the central layer (B) of at least one of the polyolefin films 11 and 14 comprises a propylene homopolymer as described above, said central layer (B) may further comprise at least one amorphous hydrocarbon resin. Said resin can have a softening point of about 130°-180°C, more preferably of about 130°-160°C, determined according to the ASTM E28 method. Said resins may be low molecular weight amorphous hydrocarbon resins, in which the number average molecular weight can be comprised between 200-1000. The amorphous hydrocarbon resin can be selected from resin obtained or obtainable from the polymerisation of styrene, methylstyrene, vinyltoluene, indene, pentadiene, cyclopentadiene and mixtures thereof. Hydrogenated resins are preferred, in particular cyclopentadiene hydrogenated resins. The amorphous hydrocarbon resins can be mixed in the molten state with the at least one propylene polymer of the central layer (B) in the form of a masterbatch in which the quantity of resin can be comprised between about 40-70% by weight with respect to the total weight of the masterbatch, the remaining part being a propylene polymer, preferably a propylene homopolymer. Generally, the central layer (B) can comprise about 10-20% by weight of masterbatch, preferably about 12-15%, with respect to the total weight of the central layer (B).

| The central layer (B) of at least one of the polyolefin films 11 and 14, preferably the central layer of both the polyolefin films 11 and 14, may comprise about 0.1-30% by weight with respect to the total weight of the central layer (B) of at least one regranulated propylene polymer, i.e. of at least one propylene polymer as described above obtained by mechanical recycling operations of at least one propylene polymer.

Optionally, the central layer (B) of at least one of the polyolefin films 11 and 14 may comprise further additives for improving the performance thereof. For example, the central layer (B) can comprise ≤ about 5% by weight with respect to the total weight of the central layer (B), preferably about 1-4% of a masterbatch comprising at least one antistatic agent.

| The layers (A) and (C) of the polyolefin film 11 may comprise at least one propylene homopolymer, preferably with MFR ≤ 3 g/10min. (230°C/2,16 kg). Optionally, the layers (A) and (C) may comprise the same propylene homopolymer.

The layers (A), (B) and (C) of the polyolefin film 11 may comprise at least one propylene homopolymer, preferably with MFR ≤ 3 g/10min. (230°C/2,16 kg), wherein the layers (A) and (C) may comprise the same at least one propylene homopolymer, and layer (B) comprises at least one propylene homopolymer different from the propylene homopolymer of layers (A) and (C).

In a further embodiment, at least one of the layers (A) and (C) of the polyolefin film 14, preferably both, may comprise at least one copolymer of propylene independently selected from copolymers of propylene with at least one comonomer selected from ethylene, linear or branched C4-C12 alpha-olefins, and mixtures thereof, preferably selected from propylene/ethylene copolymers, comprising 0.5-25% by weight of comonomer. In this embodiment, optionally, the layers (A) and (C) of the polyolefin film 14 may comprise the same at least one copolymer of propylene. This embodiment of the film 1 is particularly preferred since, with the same surface treatment (where provided), the presence of a copolymer of propylene as described above in at least one of the layers (A) or (C) increases the affinity of said layer towards the adhesive layer 15 and/or the adhesive layer 13.

In a further embodiment, the polypropylene film 14 may have transmittance ≤ 30%, measured as described in the examples. According to this embodiment, the polyolefin film 14 may comprise about 20-45% by weight, preferably about 23-40% by weight, of at least one pigmenting masterbatch, preferably based on inorganic pigments, more preferably based on titanium dioxide. The pigmenting masterbatch may comprise about 60% by weight of titanium dioxide with respect to the weight of the masterbatch.

The polymers of propylene useful for the preparation of the layers (A), (B) and (C) can be prepared by polymerisation with Ziegler-Natta catalysts or with metallocene-based catalysts, according to processes known in the art. Said polymers are normally available on the market.

Optionally, the polyolefin films 11 and 14 may be BOPP films comprising a greater number of layers than 3, the further layers being interposed between the central layer (B) and the outer layers (A) and/or (C).

In one embodiment, the polyolefin films 11 and 14 may be BOPP films as described above, characterized by heat shrink values independently selected from values ≤ about 5% in the longitudinal and/or transverse direction, preferably ≤ about 3%. The heat shrink values may be selected from values comprised in the range of about 0-5% in the longitudinal direction (MD) and in the range of about 0-3% in the transverse direction (TD). The polyolefin films 11 and 14 may be heat stable films in the transverse direction and the longitudinal direction, which undergo a limited dimensional variation when subjected to heating. This property is particularly advantageous for leaving unaltered the layer 12 comprising ink during the lamination of the films. The multilayer adhesive material according to the invention can also be characterised by heat shrink values in MD and/or TD as described above.

The polyolefin films 11 and 14 are available on the market and can preferably be obtained by means of extrusion and subsequent simultaneous or sequential, preferably simultaneous, biaxial stretching in the machine direction (MD) and in the transverse direction to the machine (TD).

| The polyolefin film 11 and/or the polyolefin film 14 comprising at least three layers A/B/C may be obtained through a simultaneous stretching process comprising the steps of:
(i) co-extruding, preferably in a flat die extruder, the components comprised in the at least three layers (A), (B) and (C), obtaining a multilayer sheet;
(ii) quenching said multilayer sheet on a roller at a temperature of about 10°-40°C;
(iii) heating said multilayer sheet with heating elements maintained at a temperature of about 100°-500°C, preferably about 100°-150°C;
(iv) subjecting said multilayer sheet to simultaneous biaxial stretching without contact with metal rollers inside a stretching frame, according to the following sub-steps:
   (iv.a) preheating: heating the multilayer sheet to the temperature of about 150°-180°C, preferably about 160°-175°C, maintaining the speed and the width of the sheet constant (i.e. maintaining the stretching ratios in MD and TD both equal to 1);
   (iv.b) stretching: subjecting the multilayer sheet to simultaneous biaxial stretching at the temperature of about 120-165°C, preferably about 150°-160°C, bringing the longitudinal (MD) and transverse (MD) stretching ratios to independently selected values in the range of about 3 - 10, preferably about 5.5 - 8; and
   (iv.c) stabilisation: maintaining the biaxially oriented multilayer film at a temperature of about 120°-180°C, preferably about 150°-170°C, reducing the stretching ratio in the MD direction and in the TD direction, obtaining a biaxially oriented multilayer film.
(v) cooling the biaxially oriented multilayer film.

During step (i) the components described above comprised in the at least three layers (A), (B) and (C) are co-extruded so as to form a multilayer sheet having a thickness of about 1-4 mm.

Subsequently, in step (ii) the multilayer sheet is quenched on a metal roller maintained at a temperature of 10°-40°C.

During step (iii) the multilayer sheet is heated with radiating elements, preferably with infra-red rays, maintained at a temperature of about 100°-500°C, preferably of about 100°-150°C.

Subsequently, in step (iv) the multilayer sheet is subjected to simultaneous biaxial stretching without contact with metal rollers, i.e. without placing the multilayer sheet directly in contact with heated surfaces during the stretching operation. Preferably, to actuate step (iv) a simultaneous biaxial stretching on flat die filming process can be used, even more preferably, for this step, Lisim^{®} (Linear Motor Simultaneous Stretching) technology can be used. This technology uses a simultaneous biaxial stretching process, for example as described in US4,853,602 and subsequent patents. During the simultaneous biaxial stretching step (iv) the edges of the sheet are coupled to the stretching frame by means of a series of grippers or clamps independently guided by synchronous linear induction motors, each gripper or clamp sliding on a rail and being drawn by a permanent magnet or by a pair of permanent magnets, pushed by the magnetic wave created by the polar expansions of the motors; each section of the stretching frame having a series of synchronous linear induction motors arranged contiguously supplied by alternating currents with phase and frequency modulated so as to continuously vary the speed of the clamps (or grippers) and therefore the longitudinal stretching ratios of the film; the transverse stretching ratios being adjusted by changing the divergence of the rails on which the grippers or clamps slide.

By appropriately reducing the stretching ratios both in the TD direction and in the MD direction during sub-step (iv.c) it is possible to obtain a biaxially oriented multilayer film that is heat-shrinkable or heat-set in at least one direction (MD and/or TD). By reducing in sub-step (iv.c) the stretching ratio in MD and in TD by values independently ≥ about 15%, preferably ≥ about 17% with respect to the maximum value of the stretching ratio in the same direction used in step (iv.b) it is possible to obtain a BOPP film with heat shrink values independently selected from values ≤ about 5% in the longitudinal and transverse direction, preferably ≤ about 3%. According to one instrance, a person skilled in the art can vary the stretching ratios in MD and TD so as to obtain a biaxially oriented film with heat shrink values independently selected between about 0-5% in the longitudinal direction (MD) and about 0-3% in the transverse direction (TD).

The longitudinal stretching ratio (MD) is defined by the ratio between the outlet speed of the multilayer film from the stretching frame (oven) and the inlet speed of the multilayer sheet into the stretching frame (oven).

The transverse stretching ratio (MD) is defined by the ratio between the width of the multilayer film at the outlet of the stretching frame (oven) and the width of the film at the inlet of the stretching frame (oven).

During step (v) of the process, the biaxially oriented multilayer film can be cooled using air at a temperature of about 25°-60°C, maintaining the stretching ratios in MD and TD constant.

The possibility allowed by the simultaneous stretching apparatus to vary the longitudinal stretching ratio (MD) within a wide range of values allows improved mechanical properties of the multilayer film in the longitudinal direction to be obtained.

The polyolefin film 11 and/or the polyolefin film 14 comprising at least three layers A/B/C may also be obtained through a sequential stretching process comprising the steps of:
(i) co-extruding, preferably in a flat die extruder, the components comprised in the at least three layers (A), (B) and (C), obtaining a multilayer sheet;
(ii) quenching said multilayer sheet on a roller at a temperature of about 10°-40°C;
(iii) heating said multilayer sheet with heating elements maintained at a temperature of about 100°-500°C, preferably about 100°-150°C;
(iv) subjecting said multilayer sheet to sequential biaxial stretching according to the following sub-steps:
   (iv.a) preheating: heating the multilayer sheet to the temperature of about 100°-150°C, preferably about 110°-130°C, maintaining the speed and the width of the sheet constant (i.e. maintaining the stretching ratios in MD and TD both equal to 1);
   (iv.b) first stretching: subjecting the multilayer sheet to longitudinal stretching (MD) at the temperature of about 70°-120°C, preferably about 80°-100°C, bringing the longitudinal stretching ratio (MD) to independently selected values in the range of about 3 - 10, preferably about 5.5 - 8,
   obtaining a mono-oriented multilayer film;
   (iv.c) stabilisation: maintaining the mono-oriented multilayer film at a temperature of about 110°-130°C, preferably about 115°-120°C, reducing the stretching ratio in the MD direction;
   (iv.d) pre-heating: heating the mono-oriented multilayer film to the temperature of about 150°-190°C, preferably about 160°-180°C, keeping constant the speed and the width of the mono-oriented multilayer film;
   (iv.e) second stretching: subjecting the mono-oriented multilayer film to transverse stretching (TD) at the temperature of about 130°-170°C,
   preferably about 150°-160°C, bringing the transverse (MD) stretching ratio to independently selected values in the range of about 7 - 8, preferably about 7.1 - 7.6;
   (iv.f) stabilisation: maintaining the biaxially oriented multilayer film at a temperature of about 150°-180°C, preferably about 160°-170°C, reducing the stretching ratio in the TD direction;
(v) cooling the biaxially oriented multilayer film.

Steps (i), (ii), (iii) and (v) can be performed as described above.

In step (iv) the multilayer sheet is subjected to sequential biaxial stretching. During the longitudinal stretching step (iv.b) the multilayer sheet can be passed through rollers having a wrap angle between them comprised between 168° and 250°. The longitudinal stretching takes place by increasing the speed of one roller with respect to the other roller immediately.

During the transverse stretching step (iv.e) the edges of the sheet are coupled to the stretching frame by means of a series of grippers or clamps solidly constrained to each other, mounted on a continuous chain drawn by a motor, wherein said grippers or clamps slide on movable guides. The transverse stretching ratio can be adjusted by adjusting the divergence of the guides.

By appropriately reducing the stretching ratios both in the TD direction and in the MD direction during the sub-steps (iv.c) and (iv.f) it is possible to obtain a biaxially oriented multilayer film that is heat-shrinkable or heat-set in at least one direction (MD and/or TD). By reducing in sub-step (iv.c) and (iv.f) the stretching ratio in MD and in TD by values independently ≥ about 15%, preferably ≥ about 17% with respect to the maximum value of the stretching ratio in MD and TD used in step (iv.b) and in step (iv.e), respectively, it is possible to obtain a biaxially oriented multilayer film with heat shrink values independently selected from values ≤ about 5% in the longitudinal and transverse direction, preferably ≤ about 3%.

A person skilled in the art can reduce the stretching ratios in MD and/or TD so as to obtain a biaxially oriented film with heat shrink values independently selected from about 0-5% in the longitudinal direction (MD) and about 0-3% in the transverse direction (TD).

The longitudinal stretching ratio (MD) is defined by the ratio between the outlet speed of the multilayer film from the longitudinal stretching frame (MDO) and the inlet speed of the multilayer sheet into the longitudinal stretching frame (MDO).

The transverse stretching ratio (MD) is defined by the ratio between the width of the biaxially oriented multilayer film at the outlet of the stretching frame (oven) and the width of the mono-oriented multilayer film at the inlet of the stretching frame (oven).

A BOPP film obtained (or obtainable) by a simultaneous stretching process as described above and having the characteristics described above is particularly suitable for the preparation of the multilayer adhesive material according to the present invention.

The multilayer adhesive material for food contact according to the invention may have a variable thickness. The multilayer adhesive material may have a thickness of about 35-65 µm, preferably about 35-53 µm, more preferably about 40-50 µm.

The polyolefin film 11 and the polyolefin film 14 may have the same or a different thickness from each other; when they have a different thickness, the thickness of the polyolefin film 14 may be greater than the thickness of the polyolefin film 11.

The multilayer adhesive film for food contact according to the invention may be produced through techniques and equipment used in the sector for the coupling (lamination) of polyolefin films. For example, the layer 13 comprising at least one ink can be arranged (applied) on the surface of the polyolefin film 11 through flexographic printing. The printed film of the polyolefin film 11 can be coupled (laminated) to the surface 14a of the polyolefin film 14 using the adhesive layer 13 as glue, by means of appropriate equipment for the lamination of plastic films. Subsequently, the layer 15 comprising the pressure-sensitive adhesive is applied, preferably spread, onto the surface 14b of the polyolefin film 14. A person skilled in the art, based on his/her own knowledge, is able to actuate the process conditions for obtaining the multilayer adhesive material according to the invention.

The multilayer adhesive material according to the invention is particularly useful for preparing a roll of adhesive material. The term "roll of adhesive material" relates in the present description and appended claims to a continuous adhesive material wound onto itself that can be cut manually or mechanically, by specific equipment or specific tools at the time of use. Preferably, the adhesive material is wound onto itself without a liner (roll of linerless adhesive material). By way of non-limiting example, the definition of rolls of adhesive material includes a roll of adhesive tape and a roll of adhesive material from which labels may be obtained. The roll of multilayer adhesive material according to the invention has the advantage of being able to be easily unwound without leaving residues of the adhesive layer 15 on the surface of the polyolefin film 11. Furthermore, thanks to the mechanical properties of the material, the roll may also be used on taping/labelling machines that operate at high speeds, subjecting the material to high tensions without causing the breakage thereof.

| The roll of adhesive material according to the invention can be obtained by cutting the multilayer adhesive material according to the invention parallel to the longitudinal direction (MD) of the polyolefin films 11 and 14 and winding it onto itself through equipment normally used in the sector.

The multilayer adhesive material according to the invention, also in roll form, may have a variable width according to the type of product to wrap/group. The width of the multilayer adhesive material may be about 25-75 mm. By way of example, rolls may be prepared with widths of 25-38 mm for mechanical applications and widths of up to 75 mm for manual applications. Likewise, the length of the roll of multilayer adhesive material according to the invention can vary within a wide range of values, mainly according to the type of application, manual or mechanical, for which the roll of adhesive material is used.

The materials comprised in the layers of multilayer adhesive material according to the invention are suitable for food contact or, when not suitable for food contact, they are shielded so as to prevent contact thereof with food. For example, the at least one ink of the layer 13 may not be suitable for contact with food, however the layer 13 is interposed between the polyolefin films 11 and 14 (i.e. shielded by the polyolefin film 11), therefore the ink of the layer 13 cannot come into contact with the food either directly or indirectly for transfer onto the surface of the polyolefin film 11 when the multilayer adhesive material is wound into a roll.

Advantageously, the adhesive material according to the invention may have global migration values in 10% ethyl alcohol (vol./vol.), 3% acetic acid (weight/vol.) and rectified olive oil ≤ (less than or equal) to about 3 mg/dm², preferably ≤ (less than or equal) to about 1 mg/dm², wherein said values are determined as described in the experimental part.

Therefore, the multilayer adhesive material according to the present invention, also in roll form, is particularly suitable for wrapping/grouping horticultural products intended for human and/or animal food, by placing the adhesive layer 15 in direct contact with the horticultural product to be wrapped/grouped.

In the present description and appended claims the term "horticultural product" relates to a fruit and/or a vegetable.

In a further aspect thereof, the present invention therefore relates to the use of a multilayer adhesive material as previously described for wrapping at least one horticultural product, preferably a plurality of horticultural products, by placing the adhesive layer 15 in direct contact with the at least one horticultural product.

The use of the multilayer adhesive material according to the invention allows horticultural products to be grouped, significantly reducing the packaging materials used in the agri-food sector, hence reducing the environmental and economic impact of the packaging waste.

In one embodiment, the present invention relates to the use of a multilayer adhesive material as previously described for grouping a plurality of horticultural products, by placing the adhesive layer 15 in direct contact with the products.

The multilayer adhesive material wrapped around the at least one horticultural product can be fastened by overlapping the adhesive layer 15 with the polyolefin film 11 (adhesive/back closure) or by coupling the adhesive layer 15 present to two ends of the multilayer adhesive material (adhesive/adhesive closure), and exerting light pressure.

The multilayer adhesive material according to the invention can be used manually or, preferably through suitable apparatuses for manual application. Alternatively, at industrial level, the multilayer adhesive material can be used by the taping/labelling/packaging machines normally used in the packaging sector.

Advantageously, the pressure necessary for fastening the adhesive layer 15 according to one of the above configurations is sufficiently reduced so as not to damage the horticultural products.

It has also been experimentally verified that the closure of the multilayer adhesive material remains intact at ambient temperature and at the chilled storage temperatures for horticultural products, and in the presence of condensation on the product to be grouped.

The present invention will be described below by means of illustrative and therefore non-limiting examples of the invention itself.

### EXAMPLE 1

For the production of a multilayer adhesive material with a thickness of about 50 µm, a polyolefin film 11 having the properties indicated in Table 1a and 1b was printed on a surface with solvent-based ink using the flexographic technique. The layer of ink was discontinuous. The printed surface of the polyolefin film 11 was coupled (laminated) to the surface 14a of a polyolefin film 14 having the properties indicated in Table 2A and 2b. The surface 14a was subjected to a flame treatment, while the surface 14b was subjected to a corona treatment.

For the lamination Polurene FP133B/FP412S (S.A.P.I.C.I. Spa) was used, which is a solvent-free two-component polyurethane adhesive. The adhesive was applied in a continuous layer in a quantity of about 2 g/m², at a lamination temperature of about 40°-60°C.

The surface 14b of the polyolefin film 14 was covered with a continuous layer of pressure-sensitive adhesive comprising an aqueous emulsion based on acrylic polymers having pH of about 3.0-5.0 applied in a quantity of about 18±2 g/m² of dry product. The pressure-sensitive adhesive used has a solid content of about 60% and a viscosity comprised between 100 and 600 mPa.s (Brookfield RV, 25°C, spindle 3, 30 rpm).

All the materials used were suitable for food contact, with the exception of the inks of layer 12.

**Table 1a - Polyolefin film 11**

| *Composition* | | |
|---|---|---|
| (A) | 99% | Moplen^{™} HP422H (LyondellBasell) Polypropylene homopolymer MFR 2.0 g/10 min (230°C/2.16 Kg; ISO 1133-1) |
| | 1% | Constab AB06001 PP (Constab Polyolefin Additives GmbH) |
| (B) | 85% | Moplen^{™} HP520H (LyondellBasell) Polypropylene homopolymer MFR 2.0 g/10 min (230°C/2.16 kg; ISO 1133-1) |
| | 15% | Regranulated propylene homopolymer |
| (C) | 99% | Moplen^{™} HP422H (LyondellBasell) Polypropylene homopolymer MFR 2.0 g/10 min (230°C/2.16 kq; ISO 1133-1) |
| | 1% | Constab AB06001 PP (Constab Polyolefin Additives GmbH) |

**Table 1b - Polyolefin film 11**

| *Properties* | | | |
|---|---|---|---|
| Film thickness | | µm | 20 |
| Gloss | ASTM D2457 | % | 95 |
| Haze | ASTM D1003 | % | 1.1 |
| Heat shrink (MD/TD) | OPMA TC4(a) 130°C/30 min. | % | 5.0/2.0 |
| Elastic modulus (MD/TD) | ASTM D882 | N/mm² | 2400/3600 |
| Ultimate tensile strength (MD/TD) | ASTM D882 | N/mm² | 170/260 |
| Ultimate elonqation (MD/TD) | ASTM D882 | N/mm² | 160/70 |

**Table 2a - Polyolefin film 14**

| *Composition* | | |
|---|---|---|
| (A) | 98% | Adsyl^{™} 5C39F (LyondellBasell) Propylene copolymer |
| | 2% | Constab AB06084 PPR (Constab Polyolefin Additives GmbH) |
| (B) | 45% | Moplen^{™} HP520H (LyondellBasell) Polypropylene homopolymer MFR 2.0 q/10 min (230°C/2.16 kq; ISO 1133-1) |
| | 25% | Regranulated propylene homopolymer |
| | 35% | Masterbatch White 94 |
| (C) | 98% | Adsyl^{™} 5C39F (LyondellBasell) Propylene copolymer |
| | 2% | Constab AB06084 PPR (Constab Polyolefin Additives GmbH) |

**Table 2b - Polyolefin film 14**

| *Properties* | | | |
|---|---|---|---|
| Film thickness | | µm | 30 |
| Gloss | ASTM D2457 | % | 50 |
| Transmittance | ASTM D1003 | % | 25 |
| Heat shrink (MD/TD) | OPMA TC4(a) 130°C/30 min. | % | 3.0/1.0 |
| Wettability ((A)/(C)) | ASTM 2578 | Dyne/cm | 40/40 |
| Elastic modulus (MD/TD) | ASTM D882 | N/mm² | 2600/3000 |
| Ultimate tensile strength (MD/TD) | ASTM D882 | N/mm² | 130/160 |
| Ultimate elonqation (MD/TD) | ASTM D882 | N/mm² | 140/120 |

The multilayer adhesive material thus obtained was wound in rolls of adhesive tape 38 mm wide and 66 m long and used to group bananas, by manually winding the adhesive tape around the product and fastening the tape by overlapping the adhesive layer with the polyolefin film 11 (adhesive/back closure) and exerting light pressure.

The adhesive tape was kept firmly closed, both at ambient temperature (about 25°-28°C) and when the products were placed in the fridge at the temperature of about 4°C. When removed from the products, the tape did not leave any adhesive residues on the products themselves.

### EXAMPLE 2

The multilayer adhesive material of example 1 was subjected to smell and taste tests for verifying the compliance with (EC) Regulation No. 1935/2004 according to UNI 10192 by the adhesive tape of example 1.

### Smell test

The smell test consists of the subjective evaluation by a panel of testers of the difference in smell, using a 5-point scale. Each tester was asked to first smell an empty container ("blank") and then one or more coded and masked bottles, containing the test pieces. They were then asked to attribute a score according to the following scale, in reference to the blank initially smelled:
0 no perceivable difference in smell;
1 difference in smell just perceivable and difficult to define;
2 slight but definable difference in smell;
3 clear difference in smell;
4 very clear difference in smell.

The final result was expressed as a mean value. The sample was considered to have a potential organoleptic impact on the product if such mean value plus the deviation is ≥ 3.0.

| *Operating conditions* | |
|---|---|
| Conditioning time | 18 hours |
| Conditioning temperature | 55±1°C |
| No. of testers | 6 |
| Quantity of sample per bottle | 4 cm² |
| Bottle volume | 500 ml |

| *Result* | |
|---|---|
| Mean value | 1.6 |
| Standard deviation | 0.5 |

### Taste test

The taste test by scoring is performed by conditioning the sample in the presence of grated milk chocolate, without there being any direct contact between the chocolate and the sample. The assessment is performed using a 5-point scale: each taster is asked to taste a portion of chocolate left in an empty bottle and a portion of chocolate conditioned in a bottle containing the sample; the evaluation is performed by attributing a score according to the following scale:
0 no perceivable difference in flavour;
1 difference in flavour just perceivable and difficult to define;
2 slight but definable difference in flavour;
3 clear difference in flavour;
4 very clear difference in flavour.

The final result was expressed as a mean value. The sample was considered to have a potential organoleptic impact on the product if such mean value plus the deviation is ≥ 2.5.

| *Operating conditions* | |
|---|---|
| Conditioning time | 48 hours |
| Conditioning temperature | 23±1°C |
| No. of tasters | 6 |
| Quantity of sample per bottle | 64 cm² |
| Quantity of chocolate | 10 g |
| Type of chocolate | "LINDT" very fine milk |

| *Result* | |
|---|---|
| Mean value | 1.0 |
| Standard deviation | 0.6 |

### EXAMPLE 3

The adhesive material of Example 1 was subjected to a global migration test according to the provisions of standards UNI EN 1186-1:2003, UNI EN 1186-4:2003 and UNI EN 1186-5:2003.

The following conditions were used for the test:

| *Simulant liquids:* | *Contact conditions* |
|---|---|
| Ethyl alcohol 10% v/v - simulant A | 10 days at 40°C |
| Acetic acid 3% w/v - simulant B | 10 days at 40°C |
| Rectified olive oil - simulant D2 | 10 days at 40°C |
| | |
| Surface area of tested sample | 0.5 dm² |
| Volume of simulant | 1 dl |
| Detectability limit | 1 mg/dm² |

The test was performed according to the total immersion method on the liquid coming from contact. Table 3 shows the global migration values obtained in the three simulant liquids.

| **Table 3** - **global migration** | |
|---|---|
| | (mg/dm²) |
| Ethyl alcohol 10% v/v - simulant A | ≤ 1 |
| Acetic acid 3% w/v - simulant B | ≤ 1 |
| Rectified olive oil - simulant D2 | ≤ 1 |

### EXAMPLE 4

A specific migration test of N,N-bis(2-hydroxyethyl)alkyl(C8-C18)amine was performed on a sample of adhesive material obtained in Example 1, performed after concentration of the simulant liquid and subsequent analysis with LC-MS system. The quantification was performed through an external calibration of N,N-bis(2-hydroxyethyl)alkyl(C8-C18)amine in the same simulant liquid. The test conditions were the same ones indicated in Example 3; in the case of N,N-bis(2-hydroxyethyl)alkyl(C8-C18)amine, the detectability limit is 0.5 mg/Kg. Each quantitative analysis was performed as a double test; Table 4 shows the mean values obtained for each simulant.

| **Table 4 - specific N,N-bis(2-hydroxyethyl)alkyl(C8-C18)amine** | |
|---|---|
| | (mg/Kg) |
| Ethyl alcohol 10% v/v - simulant A | ≤ 0.5 |
| Acetic acid 3% w/v - simulant B | ≤ 0.5 |
| Rectified olive oil - simulant D2 | ≤ 0.5 |

### EXAMPLE 5

A specific migration test of the primary aromatic amines indicated in Table 5 was performed on a sample of adhesive material obtained in Example 1. Acetic acid 3% w/v was used as the simulant liquid for the migration. The test sample was completely immersed in the simulant for 10 days at 40°C. The quantitative determination of the amines was performed through LC-MS/MS, using an external standard in the same simulant for the calibration.

**Table 5**

| COMPOUND | µg/kg |
|---|---|
| 2,4,5-Trimethylaniline(2,4,5 TMA CAS 137-17+-7) | <0.4 |
| 2-Methoxy-5-methylaniline (2-M-5 MA CAS 120-71-8) | <0.4 |
| 2-Naphthylaniline(2-ANP CAS 91-59-8) | <0.4 |
| 3,3'-Dimethylbenzidine (3,3 DMB CAS 119-93-7) (4,4'-D | <0.4 |
| 4,4'-Diaminodiphenylether (4,4-DPE CAS 101-80-4) | <0,4 |
| 4,4'-Methylanebis[2-chloroaniline](CL-MDA CAS 101-14-4), | <0,4 |
| 4,4'-Methylenedianiline (4,4MDA CAS 101-77-9) | <0,4 |
| 4,4'-Methylenedi-o-toluene (4.4 MDoT CAS 838-80-0) | <0,4 |
| 4,4'-Thioaniline(4,4-thioANL CAS 139-65-1) | <0,4 |
| 4-Aminobiphenyl (4-ABP CAS 92-67-1) | <0,4 |
| 4-chloro-Aniline(4-CA CAS 106-47-8) | <0,4 |
| 4-Chloro-o-toluidine(4-Cot CAS 95-69-2) | <0,4 |
| 5-Nitro-o-Toluidine(5-N-oT CAS 99-55-8) | <0,4 |
| Benzidine (BNZ CAS 92-67-5) | <0,4 |
| o-Anisiline (o-ASD CAS 90-04-0) | <0,4 |
| o-Dianisidine (o-diASD CAS 119-90-4) | <0,4 |
| o-Toluidine (o-TOL CAS 95-53-4) | <0,4 |
| p-Aminoazobenzene (AAB CAS 60-09-3) | <0,4 |
| Aniline(ANL CAS 62-53-3) | <0,4 |
| 2.4/2,6-Toluenediamine (2,4-2,6-TDA CAS 823-40-5 CAS 95-80-7) | <0,8 |

## Claims

1. Multilayer adhesive material for food contact comprising:
- a polyolefin film (14) having a first surface (14a) and a second surface (14b) opposite the first;
- a polyolefin film (11) coupled to the polyolefin film (14) on the first surface (14a) by means of a layer (13) comprising at least one adhesive;
- a layer (12) comprising at least one ink interposed between the polyolefin films (11) and (14); and
- an adhesive layer (15) comprising at least one pressure-sensitive adhesive arranged on the second surface (14b) of the polyolefin film (14), wherein the at least one pressure-sensitive adhesive is an aqueous emulsion stable at pH less than 7.5 based on at least one acrylic polymer.

2. The multilayer adhesive material for food contact according to claim 1, wherein the at least one pressure sensitive adhesive is an aqueous emulsion stable at 3.0 ≤ pH < 7.5.

3. The multilayer adhesive material for food contact according to claim 1 or 2, wherein the layer (12) is arranged on the surface of the polyolefin film (11) and is coupled to the polyolefin film (14).

4. The multilayer adhesive material for food contact according to any one of claims 1-3, wherein the at least one pressure sensitive adhesive has at least one of the following properties:
- viscosity 100-600 mPa.s (Brookfield RV, 25°C, spindle 3, 30 rpm); and/or
- solid content about 45-70% by weight, preferably about 53-68% by weight.

5. The multilayer adhesive material for food contact according to any one of claims 1-4, wherein the adhesive layer (15) is a continuous or discontinuous, preferably continuous, layer.

6. The multilayer adhesive material for food contact according to any one of claims 1-5, wherein the dry weight of the at least one pressure-sensitive adhesive per unit of area covered with adhesive is 5-50 g/m², preferably 10-30 g/m².

7. The multilayer adhesive material for food contact according to any one of claims 1-6, wherein at least one of the polyolefin films (11) and (14) is a multilayer biaxially oriented polypropylene film (BOPP) comprising at least three layers A/B/C wherein:
- the layer (A) and the layer (C) comprise at least one propylene polymer independently selected from propylene homopolymer, copolymers of propylene with at least one comonomer selected from ethylene and linear or branched C4-C12 alpha-olefins, and mixtures thereof; and
- the layer (B) comprises at least one propylene polymer with MFR less than or equal to 3g/10min. (230°C/2,16 kg) selected from propylene homopolymer, copolymers of propylene with at least one comonomer selected from ethylene and linear or branched C4-C12 alpha-olefins, and mixtures thereof.

8. The multilayer adhesive material for food contact according to claim 7, wherein at least one of the layers (A) and (C) of the polyolefin film (14) comprises at least one copolymer of propylene independently selected from copolymers of propylene with at least one comonomer selected from ethylene, linear or branched C4-C12 alpha-olefins, and mixtures thereof, preferably selected from propylene/ethylene copolymers, comprising 0.5-25% by weight of comonomer.

9. The multilayer adhesive material for food contact according to any one of claims 1-7, wherein the polyolefin films (11) and (14) are multilayer biaxially oriented polypropylene films (BOPP) **characterised in that** they have heat shrink values independently selected from values of less than or equal to 5% in the longitudinal and/or transverse direction, preferably less than or equal to 3%.

10. The multilayer adhesive material for food contact according to any one of claims 1-9, wherein the polypropylene film (14) has a transmittance of less than or equal to 30%.

11. The multilayer adhesive material for food contact according to any one of claims 1-10 in roll form, preferably linerless roll.

12. The multilayer adhesive material according to any one of claims 1-11, wherein said multilayer adhesive material has global migration values in 10% (vol./vol.) ethyl alcohol, 3% acetic acid (weight/vol.) and rectified olive oil of less than or equal to about 3 mg/dm², preferably less than or equal to about 1 mg/dm².

13. A use of a multilayer adhesive material for food contact according to any one of claims 1-12 for wrapping at least one horticultural product by placing the adhesive layer (15) in direct contact with the at least one horticultural product.

14. The use of the multilayer adhesive material according to claim 13 for grouping a plurality of horticultural products by placing the adhesive layer (15) in direct contact with the products.

15. The use of the multilayer adhesive material according to claim 13 or 14, wherein the multilayer adhesive material wrapped around the at least one horticultural product is fastened by overlapping the adhesive layer (15) with the polyolefin film (11) (adhesive/back closure).

## Patentansprüche

1. Mehrschichtiges haftendes Material für den Kontakt mit Lebensmitteln, das Folgendes umfasst:
- einen Polyolefinfilm (14), der eine erste Oberfläche (14a) und eine zweite Oberfläche (14b) gegenüber der ersten hat;
- einen Polyolefinfilm (11), der über eine Schicht (13), die mindestens einen Klebstoff umfasst, mit dem Polyolefinfilm (14) an der ersten Oberfläche (14a) gekoppelt ist;
- eine Schicht (12), die mindestens eine zwischen den Polyolefinfilmen (11) und (14) angebrachte Tinte umfasst; und
- eine Klebstoffschicht (15), die mindestens einen Selbstkleber umfasst, angebracht auf der zweiten Oberfläche (14b) des Polyolefinfilms (14), wobei der mindestens eine Selbstkleber eine wässerige Emulsion ist, die bei einem pH-Wert von weniger als 7,5 stabil ist und auf mindestens einem Acrylpolymer basiert.

2. Das mehrschichtige haftende Material für den Kontakt mit Lebensmitteln gemäß Anspruch 1, wobei der mindestens eine Selbstkleber eine wässerige Emulsion ist, die bei 3,0 ≤ pH < 7,5 stabil ist.

3. Das mehrschichtige haftende Material für den Kontakt mit Lebensmitteln gemäß Anspruch 1 oder 2, wobei die Schicht (12) auf der Oberfläche des Polyolefinfilms (11) angebracht und mit dem Polyolefinfilm (14) gekoppelt ist.

4. Das mehrschichtige haftende Material für den Kontakt mit Lebensmitteln gemäß einem beliebigen der Ansprüche 1-3, wobei der mindestens eine Selbstkleber mindestens eine der folgenden Eigenschaften hat:
- Viskosität 100-600 mPa.s (Brookfield RV, 25°C, Spindel 3, 30 U/min) und/oder
- Feststoffgehalt ungefähr 45-70 Gewichtsprozent, vorzugsweise ungefähr 53-68 Gewichtsprozent.

5. Das mehrschichtige haftende Material für den Kontakt mit Lebensmitteln gemäß einem beliebigen der Ansprüche 1-4, wobei die haftende Schicht (15) eine durchgängige oder nicht durchgängige, vorzugsweise eine durchgängige, Schicht ist.

6. Das mehrschichtige haftende Material für den Kontakt mit Lebensmitteln gemäß einem beliebigen der Ansprüche 1-5, wobei das Trockengewicht des mindestens einen Selbstklebers pro mit Klebstoff bedeckter Flächeneinheit 5-50 g/m², vorzugsweise 10-30 g/m², beträgt.

7. Das mehrschichtige haftende Material für den Kontakt mit Lebensmitteln gemäß einem beliebigen der Ansprüche 1-6, wobei mindestens einer der Polyolefinfilme (11) und (14) eine mehrschichtige biaxial gereckte Polypropylenfolie (biaxially oriented polypropylene film, BOPP) ist, die mindestens drei Schichten, A/B/C, umfasst, wobei:
- Schicht (A) und Schicht (C) mindestens ein Propylenpolymer umfassen, unabhängig gewählt aus Propylenhomopolymer, Copolymeren von Propylen mit mindestens einem Comonomer, gewählt aus Ethylen und linearen oder verzweigten C₄-C₁₂-alpha-Olefinen, und Mischungen davon; und
- Schicht (B) mindestens ein Propylenpolymer mit einem Schmelzflussindex von höchstens 3 g/10 min (230°C/2,16kg) umfasst, gewählt aus Propylenhomopolymer, Copolymeren von Propylen mit mindestens einem Comonomer, gewählt aus Ethylen und linearen oder verzweigten C₄-C₁₂-alpha-Olefinen, und Mischungen davon.

8. Das mehrschichtige haftende Material für den Kontakt mit Lebensmitteln gemäß Anspruch 7, wobei mindestens eine der Schichten (A) und (C) des Polyolefinfilms (14) mindestens ein Copolymer von Propylen umfasst, unabhängig gewählt aus Copolymeren von Propylen mit mindestens einem Comonomer, gewählt aus Ethylen, linearen oder verzweigten C₄-C₁₂-alpha-Olefinen und Mischungen davon, vorzugsweise gewählt aus Propylen/EthylenCopolymeren, die 0,5-25 Gewichtsprozent Comonomer umfassen.

9. Das mehrschichtige haftende Material für den Kontakt mit Lebensmitteln gemäß einem beliebigen der Ansprüche 1-7, wobei die Polyolefinfilme (11) und (14) mehrschichtige biaxial gereckte Polypropylenfolien (BOPP) sind, **dadurch gekennzeichnet, dass** sie Wärmeschrumpfwerte haben, die unabhängig gewählt sind aus Werten von höchstens 5% in der Längsrichtung und/oder in der transversalen Richtung, vorzugsweise höchstens 3%.

10. Das mehrschichtige haftende Material für den Kontakt mit Lebensmitteln gemäß einem beliebigen der Ansprüche 1-9, wobei die Polypropylenfolie (14) eine Durchlässigkeit von höchstens 30% hat.

11. Das mehrschichtige haftende Material für den Kontakt mit Lebensmitteln gemäß einem beliebigen der Ansprüche 1-10 in Rollenform, vorzugsweise in Form einer Linerless-Rolle.

12. Das mehrschichtige haftende Material gemäß einem beliebigen der Ansprüche 1-11, wobei das mehrschichtige haftende Material globale Migrationswerte von 10% (Vol./Vol.) Ethylalkohol, 3% Essigsäure (Gewicht/Vol.) und hochkonzentriertes Olivenöl von höchstens ungefähr 3mg/dm², vorzugsweise höchstens ungefähr 1 mg/dm², hat.

13. Eine Verwendung eines mehrschichtigen haftenden Materials für den Kontakt mit Lebensmitteln gemäß einem beliebigen der Ansprüche 1-12 zum Einwickeln mindestens eines Gartenbauprodukts durch Platzieren der haftenden Schicht (15) in direkten Kontakt mit dem mindestens einen Gartenbauprodukt.

14. Die Verwendung des mehrschichtigen haftenden Materials gemäß Anspruch 13 zum Bündeln einer Vielzahl von Gartenbauprodukten durch Platzieren der haftenden Schicht (15) in direkten Kontakt mit den Produkten.

15. Die Verwendung des mehrschichtigen haftenden Materials gemäß Anspruch 13 oder 14, wobei das mehrschichtige haftende Material, das um das mindestens eine Gartenbauprodukt gewickelt wird, durch Überlappung der haftenden Schicht (15) mit dem Polyolefinfilm (11) (Verschluss Haftschicht/Stützschicht) befestigt wird.

## Revendications

1. Matériau adhésif multicouche pour contact alimentaire comportant :
- un film de polyoléfine (14) ayant une première surface (14a) et une seconde surface (14b) opposée à la première,
- un film de polyoléfine (11) couplé au film de polyoléfine (14) sur la première surface (14a) au moyen d'une couche (13) comportant au moins un adhésif,
- une couche (12) comportant au moins une encre intercalée entre les films de polyoléfine (11) et (14), et
- une couche d'adhésif (15) comportant au moins un adhésif sensible à la pression agencé sur la seconde surface (14b) du film de polyoléfine (14), dans lequel le au moins un adhésif sensible à la pression est une émulsion aqueuse stable à un pH inférieur à 7,5 basée sur au moins un polymère acrylique.

2. Matériau adhésif multicouche pour contact alimentaire selon la revendication 1, dans lequel le au moins un adhésif sensible à la pression est une émulsion aqueuse stable à 3,0 ≤ pH < 7,5.

3. Matériau adhésif multicouche pour contact alimentaire selon la revendication 1 ou 2, dans lequel la couche (12) est agencée sur la surface du film de polyoléfine (11) et est couplée au film de polyoléfine (14).

4. Matériau adhésif multicouche pour contact alimentaire selon l'une quelconque des revendications 1 à 3, dans lequel le au moins un adhésif sensible à la pression a au moins une des propriétés suivantes :
- viscosité de 100 à 600 mPa.s (Brookfield RV, 25 °C, broche 3, 30 t/min), et/ou
- teneur en matières solides d'environ 45 à 70 % en poids, de préférence d'environ 53 à 68 % en poids.

5. Matériau adhésif multicouche pour contact alimentaire selon l'une quelconque des revendications 1 à 4, dans lequel la couche d'adhésif (15) est une couche continue ou discontinue, de préférence continue.

6. Matériau adhésif multicouche pour contact alimentaire selon l'une quelconque des revendications 1 à 5, dans lequel le poids à sec du au moins un adhésif sensible à la pression par unité de surface recouverte d'adhésif est de 5 à 50 g/m², de préférence de 10 à 30 g/m².

7. Matériau adhésif multicouche pour contact alimentaire selon l'une quelconque des revendications 1 à 6, dans lequel au moins un des films de polyoléfine (11) et (14) est un film multicouche de polypropylène orienté bi-axialement (BOPP) comportant au moins trois couches A/B/C, dans lequel :
- la couche (A) et la couche (C) comportent au moins un polymère de propylène choisi indépendamment parmi un homopolymère de propylène, des copolymères de propylène avec au moins un comonomère choisi parmi l'éthylène et des alpha-oléfines en C4 à C12 linéaires ou ramifiées, et des mélanges de ceux-ci, et
- la couche (B) comporte au moins un polymère de propylène avec un MFR inférieur ou égal à 3 g/10 min (230 °C/2,16 kg) choisi parmi un homopolymère de propylène, des copolymères de propylène avec au moins un comonomère choisi parmi l'éthylène et des alpha-oléfines en C4 à C12 linéaires ou ramifiées, et des mélanges de ceux-ci.

8. Matériau adhésif multicouche pour contact alimentaire selon la revendication 7, dans lequel au moins une des couches (A) et (C) du film de polyoléfine (14) comporte au moins un copolymère de propylène choisi indépendamment parmi des copolymères de propylène avec au moins un comonomère choisi parmi l'éthylène, des alpha-oléfines en C4 à C12 linéaires ou ramifiées, et des mélanges de ceux-ci, de préférence choisi parmi des copolymères de propylène/éthylène, comportant 0,5 à 25 % en poids de comonomère.

9. Matériau adhésif multicouche pour contact alimentaire selon l'une quelconque des revendications 1 à 7, dans lequel les films de polyoléfine (11) et (14) sont des films multicouches de polypropylène orienté bi-axialement (BOPP), **caractérisé en ce qu'**ils ont des valeurs de thermorétraction choisies indépendamment parmi des valeurs inférieures ou égales à 5 % dans la direction longitudinale et/ou transversale, de préférence inférieures ou égales à 3 %.

10. Matériau adhésif multicouche pour contact alimentaire selon l'une quelconque des revendications 1 à 9, dans lequel le film de polypropylène (14) a une transmittance inférieure ou égale à 30 %.

11. Matériau adhésif multicouche pour contact alimentaire selon l'une quelconque des revendications 1 à 11 sous forme de rouleau, de préférence de rouleau sans doublure.

12. Matériau adhésif multicouche selon l'une quelconque des revendications 1 à 11, dans lequel ledit matériau adhésif multicouche a des valeurs de migration globale dans 10 % (vol./vol.) d'alcool éthylique, 3 % d'acide acétique (poids/vol.) et de l'huile d'olive rectifiée inférieures ou égales à environ 3 mg/dm², de préférence inférieures ou égales à environ 1 mg/dm².

13. Utilisation d'un matériau adhésif multicouche pour contact alimentaire selon l'une quelconque des revendications 1 à 12 pour envelopper au moins un produit horticole en plaçant la couche d'adhésif (15) en contact direct avec le au moins un produit horticole.

14. Utilisation du matériau adhésif multicouche selon la revendication 13 pour regrouper une pluralité de produits horticoles en plaçant la couche d'adhésif (15) en contact direct avec les produits.

15. Utilisation du matériau adhésif multicouche selon la revendication 13 ou 14, dans laquelle le matériau adhésif multicouche enveloppé autour du au moins un produit horticole est fixé par chevauchement de la couche d'adhésif (15) avec le film de polyoléfine (11) (adhésif/fermeture arrière).
